# EUROPÄISCHE PATENTSCHRIFT

(11) **EP 2 912 738 B1**
(45) Veröffentlichungstag und Bekanntmachung des Hinweises auf die Patenterteilung: **20.06.2018**
(21) Anmeldenummer: 13766013.0
(22) Anmeldetag: 19.09.2013
(51) Int. Cl.: H02G 13/00

(54) **BLITZSCHUTZEINRICHTUNG MIT ISOLIERTER ABLEITUNG**
LIGHTNING PROTECTION DEVICE HAVING AN INSULATED DIVERTER
SYSTÈME DE PROTECTION CONTRE LA FOUDRE AVEC DESCENTE ISOLÉE

(30) Priorität: 26.10.2012 DE 102012021589; 28.03.2013 DE 102013005393
(43) Veröffentlichungstag der Anmeldung: 02.09.2015
(73) Patentinhaber: Dehn + Söhne GmbH + Co. KG, 92318 Neumarkt/Opf. (DE)
(72) Erfinder: ROTHER, Claudia, 92318 Neumarkt (DE); BROCKE, Ralph, 98693 Ilmenau (DE); SCHÖLL, Helmut, 90602 Seligenporten (DE)
(74) Vertreter: Kruspig, Volkmar
(86) Internationale Anmeldenummer: PCT/EP2013/069469
(87) Internationale Veröffentlichungsnummer: WO 2014/063870

(56) Entgegenhaltungen:
- EP-A1- 1 143 460
- WO-A1-2006/099880
- WO-A1-2008/026766
- DE-A1- 1 515 889
- DE-A1- 10 228 665
- DE-A1-102005 041 167
- GB-A- 1 221 651
- JP-A- H03 124 001
- JP-A- 2001 023 794
- US-A- 1 746 650

## Beschreibung

Die Erfindung betrifft eine Blitzschutzeinrichtung gemäß Patentanspruch 1.

Es ist bekannt, im äußeren Blitzschutz isolierte Ableitungen im Endverschlussbereich entlang oder im Inneren eines Stützrohrs zu verlegen. Zur Unterdrückung von Gleitentladungen auf der Oberfläche von isolierten Ableitungen ist es notwendig, dass der halbleitende Mantel der Ableitung an den nicht blitzstrombehafteten Potentialausgleich angebunden wird. Dies erfolgt durch Elemente, die direkt auf die Leitung aufgebracht und an den Potentialausgleich angeschlossen werden. Der räumliche Abstand des Potentialausgleichsanschlusses der isolierten Ableitung zum eigentlichen Anschlusselement ist auf die elektrische Leitfähigkeit des halbleitenden Mantels der isolierten Ableitung und dem äquivalenten Trennungsabstand des Blitzschutzsystems abgestimmt. Als isolierte Ableitungen kommen insbesondere sogenannte HVI-Leitungen (HVI: eingetragene Marke der DEHN +SÖHNE GmbH + Co. KG) zum Einsatz. Beim Einsatz einer HVI-Leitung besteht die Gefahr, dass hohe Impulsspannungen ohne zusätzliche Maßnahmen Überschläge an Isolierstoffoberflächen verursachen. Um einen sogenannten Gleitüberschlag zu vermeiden, ist die HVI-Leitung mit einem äußeren halbleitenden Mantel ausgestattet, der es ermöglicht, hohe Blitzimpulsspannungen gegen ein Bezugspotential zu steuern. Funktionsbedingt wird dazu im Bereich des Endverschlusses eine Verbindung zwischen dem äußeren halbleitenden Material und dem Potentialausgleich des Gebäudes geschaffen.

Bei einer bekannten Ausführungsform der Einrichtung zum Kontaktieren einer Feldsteuerschicht einer isolierten Ableitung besteht der auf die Feldsteuerschicht aufzubringende Potentialanschluss aus zwei halbschalenförmigen Teilen, die von beiden Seiten auf die Oberfläche der Leitung gedrückt und dann in ein Halterohr geschoben werden. Anschließend erfolgt eine elektrische Kontaktierung mittels Schraubkontakt hin zu einer außen liegenden metallischen Hülse, die wiederum mit einem Potentialausgleichsanschluss in Verbindung steht. Hinsichtlich des vorerwähnten Standes der Technik sei verwiesen auf www.obo-bettermann.com/download/montage/cbs/ iscon_systemanleitung_120615_de.pdf

Die eingangs erwähnten Blitzstromableiteinrichtungen auf der Basis isolierter Ableitungen sind bekannt z.B. aus der DE 102 28 665 B4 oder der DE 102 33 528 B4. Es wird diesbezüglich ein elektrischer Leiter verwendet, der in eine Isolationsumhüllung eingebettet ist, die wiederum eine leitfähige Ummantelung aufweist, wobei im Anschlussabschnitt des elektrischen Leiters mit der Fangeinrichtung eine Anordnung zur Feldsteuerung zum Zweck des Verhinderns von Gleitentladungen und zur Erhöhung der Impulsspannungsfestigkeit vorgesehen ist. Weiterhin ist die Blitzstromableiteinrichtung an einen nicht blitzstrombehafteten Potentialausgleich angebunden.

Die DE 10 2005 041 167 A1 zeigt eine Blitzstromableitvorrichtung, die aus einer Fangeinrichtung besteht, welche über einen elektrischen Leiter mit einer Erdungsanlage verbunden ist. Der elektrische Leiter ist von einer Isolierung umgeben. Die Isolierung besteht aus einer Schicht aus einem Material, welches ein nichtlineares elektrisches Verhalten aufweist.

Am der Fangeinrichtung zugewandten Endbereich der Isolierung und der diese umgebenden Schicht ist eine Anschlusskappe installiert, die die Fangeinrichtung, den elektrischen Leiter und die umgebende Schicht miteinander elektrisch leitend verbindet. Der Halter ist z.B. aus Metall gefertigt.

In vielen Fällen ist es aus ästhetischen Gründen von Vorteil, die isolierte Ableitung für Blitzschutzeinrichtungen des äußeren Blitzschutzes innerhalb eines Stützrohrs bzw. einer Anordnung zur Fangstangenbefestigung zu verlegen. Im weiteren Verlauf wird die isolierte Ableitung unter Dach verlegt, was beispielsweise bei Reetdächern von Vorteil ist. Als Stützrohr kommen z.B. glasfaserverstärkte Rohre zum Einsatz, die die isolierte Ableitung von der Fangspitze in das Dachinnere führen. Mit einer derartigen Konstruktion kann auf ansonsten erforderliche aufgeständerte Verlegetechniken verzichten werden. Es hat sich jedoch gezeigt, dass hohe Impulsspannungen, die beim Blitzeinschlag in die Blitzschutzeinrichtung auftreten, bei insbesondere nasser und verschmutzter Oberfläche des Stützrohrs zu Gleitentladungen entlang der Stützrohroberfläche und damit zu einem Versagen des gesamten Blitzschutzsystems führen.

Es ist daher Aufgabe der Erfindung, eine weiterentwickelte Blitzschutzeinrichtung mit isolierter Ableitung, welche mindestens abschnittsweise innerhalb eines Stützrohrs verläuft, anzugeben, welche auch bei hohen Impulsspannungen Gleitentladungen entlang des Stützrohrs vermeidet, so dass auch bei Alterungserscheinungen und/oder problematischen Umweltbedingungen die entsprechend ausgerüstete Blitzschutzeinrichtung ihre Funktion uneingeschränkt gewährleistet.

Die Lösung der Aufgabe der Erfindung erfolgt durch eine Blitzschutzeinrichtung gemäß der Merkmalskombination nach Patentanspruch 1, wobei die Unteransprüche mindestens zweckmäßige Ausgestaltungen und Weiterbildungen umfassen.

Es wird demnach von einer Blitzschutzeinrichtung mit isolierter Ableitung ausgegangen, welche mindestens abschnittsweise innerhalb eines Stützrohrs verläuft. Weiterhin ist eine Fangstangenbefestigung vorhanden, die auf dem Stützrohr aufsitzt und mit diesem verbunden ist.

Die Fangstangenbefestigung umfasst ein Kopfteil, das einerseits den Leiter der isolierten Ableitung sowie andererseits die Fangstange oder eine entsprechende Fangspitze aufnimmt. Weiterhin ist das Stützrohr an seinem dem Kopfteil der Fangstangenbefestigung gegenüberliegenden Ende über eine Hülsenanordnung oder dergleichen Mittel mit einem auf Erdpotential liegenden Standfuß oder Tragrohr verbunden.

Erfindungsgemäß weist das Stützrohr feldsteuernde, elektrisch schwachleitende oder halbleitende Eigenschaften auf.

Es sei an dieser Stelle darauf aufmerksam gemacht, dass unter dem Begriff Stützrohr nicht nur klassische rohrförmige Tragelemente zu verstehen sind, sondern ebenso auch Profile unterschiedlichen Querschnitts sowie sonstige Körper unterfallen, die geeignet sind, in ein System mit isolierten Ableitungen zum Zweck des äußeren Blitzschutzes implementiert zu werden.

Bei einer ersten Ausführungsform der Erfindung besteht die Möglichkeit, ausgehend von einem nicht leitenden Schutzrohr, die Außenoberfläche oder aber auch die Außen- und Innenoberfläche dieses Rohres mit einer elektrisch schwachleitenden oder halbleitenden Beschichtung zu versehen.

Diese Beschichtung oder Schicht kann als Laminat ausgeführt, durch Extrusion erzeugt, aber auch durch Streichen oder Sprühen realisiert werden.

Ebenso ist eine Beschichtung als Hüllschicht, z.B. durch Aufschrumpfen ausführbar.

Die vorstehend erwähnte Beschichtung mit den feldsteuernden Eigenschaften kann zusätzlich mit einer Außenumhüllung in Form einer Schutzschicht versehen sein, die z.B. den Einfluss schädigender ultravioletter Strahlung minimiert.

Ergänzend besteht die Möglichkeit, auf der Außenoberfläche des Stützrohrs isolationsstreckenverlängernde Hauben oder Schirme anzuordnen oder auszubilden.

In Weiterbildung der Erfindung kann das Stützrohr selbst aus einem Material bestehen, das feldsteuernde, elektrisch schwachleitende oder halbleitende Eigenschaften aufweist.

Die feldsteuernden Eigenschaften des Stützrohrs können durch lineare, ohmsche oder nichtlineare elektrische Leitfähigkeiten realisiert werden.

Die Beschichtung, welche die feldsteuernden Eigenschaften bestimmt, steht einerseits mit dem Kopfteil der Fangeinrichtung und andererseits mit einer leitfähig ausgebildeten Hülsenanordnung in elektrischem Kontakt.

Innerhalb der vorerwähnten Hülsenanordnung kann ein Anschlussmittel zum elektrischen Verbinden des Außenmantels der Ableitung zum Zweck des Potentialausgleichs vorgesehen sein.

Dieses Anschlussmittel ist bei einer Lösungsvariante so ausgeführt, dass selbiges unter Federkraftvorspannung mit dem Außenmantel der Ableitung in Verbindung steht.

Die Erfindung soll nachstehend anhand von Ausführungsbeispielen sowie unter Zuhilfenahme von Figuren näher erläutert werden.

Hierbei zeigen:
- Fig. 1: eine Längsschnitt- und Querschnittdarstellung einer ersten Ausführungsform der Blitzschutzeinrichtung mit isolierter Ableitung und Stützrohr mit feldsteuernder Beschichtung;
- Fig. 2: eine Ausführungsform ähnlich derjenigen nach Fig. 1 in Längsschnitt- und Querschnittdarstellung, jedoch mit zusätzlichen, schirmartigen isolationsstreckenverlängernden Mitteln und
- Fig. 3: eine Längsschnitt- und Querschnittdarstellung einer weiteren Ausführungsform der Blitzschutzeinrichtung mit Stützrohr, welches eine isolierte Ableitung aufnimmt, wobei das Stützrohr selbst aus einem schwachleitenden und damit feldsteuernden Material besteht.

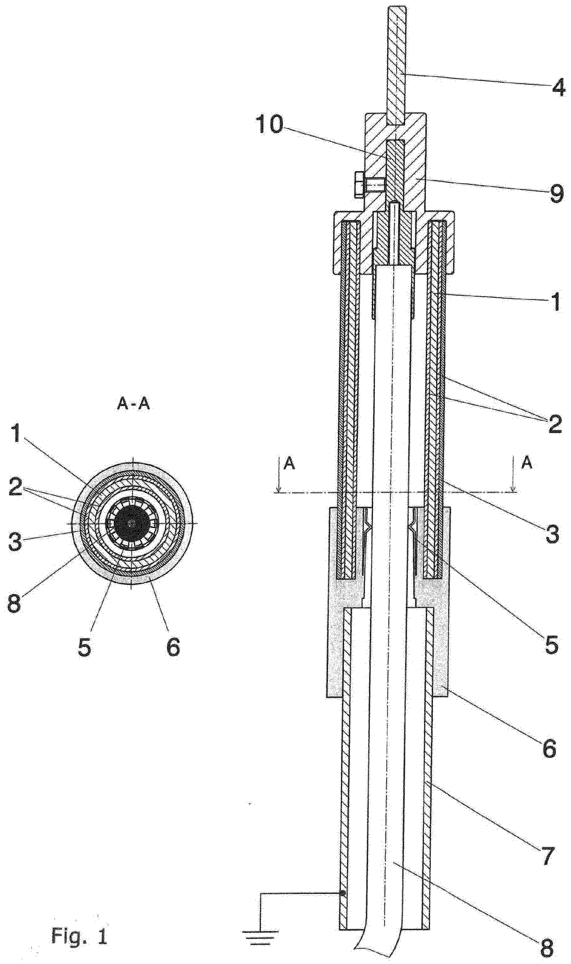

Die Fig. 1 bis 3 machen deutlich, dass die isolierte Ableitung 8 im Stützrohr 1; 12 verlegt und von diesem Stützrohr im Inneren aufgenommen wird. Die isolierte Ableitung 8 kann darüber hinaus im Inneren eines Standfußes oder Tragrohrs 7 verlegt werden, welches auf Erdpotential liegt.

Zwischen Stützrohr 1; 12 und dem Standfuß oder Tragrohr 7 ist eine Hülsenanordnung aus einem elektrisch leitfähigen Material vorhanden, welches sowohl Standfuß bzw. Tragrohr 7 mit einem Ende als auch ein Ende des Stützrohrs 1; 12 aufnimmt. Über die Hülsenanordnung 6 kann auch ein Potentialausgleichsanschluss realisiert werden. Diesbezüglich ist innerhalb der Hülsenanordnung 6, und zwar in dem zum Stützrohr 1; 12 weisenden Teil, ein Anschlussmittel 5 vorhanden, welches dem elektrischen Verbinden des Außenmantels des Leiters 8 zum Zweck des Potentialausgleichs dient.

Dieses Anschlussmittel 5 kann als federartige Klemmvorrichtung ausgeführt werden, um beschädigungsfrei und sicher die gewünschte Kontaktierung der Außenoberfläche des Leiters 8 zu realisieren.

Blitzstrom wird über die Fangspitze 4 in das Kopfteil 9 und somit in den Anschlusskopf 10 der isolierten Ableitung 8 geleitet und auf eine oder mehrere (nicht gezeigte) isolierte Ableitungen 8 verteilt, die den Blitzstrom sicher zum Erdpotential des zu schützenden Objekts führen.

Gemäß der Darstellung nach Fig. 1 wird zur Vermeidung von Gleitentladungen entlang der Oberfläche des Stützrohrs 1 eine schwachleitende Schicht 2 auf dieses Stützrohr aufgebracht, welche ohmsche oder nichtlineare elektrische Leitfähigkeiten aufweist.

Diese schwachleitfähige Schicht 2 unterdrückt bzw. verzögert die Entstehung von Vorentladungen. Hierdurch kann in überraschender Weise die Länge der Isolationsstrecke, d.h. die Länge des Stützrohrs 1 verkürzt werden.

Einflüssen wie Verschmutzungen, die eine Erhöhung der äquivalenten Länge der Isolationsstrecke verursachen, wird wirksam entgegengewirkt.

Die schwachleitende Schicht kann als Laminat oder Extrudat ausgebildet sein, aber auch durch Spritzen oder Streichen erzeugt werden.

Zum Schutz vor Witterungseinflüssen und/oder ultravioletter Strahlung kann auf der äußeren leitenden Schicht 2 noch eine Schutzschicht 3 aufgebracht werden.

Die schwach leitfähige Schicht zur Unterdrückung bzw. Verzögerung der Entstehung von Vorentladungen kann z.B. auf der Basis eines leitfähigen Oberflächen-Vliesmaterials ausgebildet werden. Dieses leitfähige Vliesmaterial kann in die Oberfläche des glasfaserverstärkten Kunststoffmaterials des eigentlichen Rohres eingearbeitet sein. In diesem Fall ergibt sich eine hohe UV-Beständigkeit und eine Beständigkeit gegen sonstige Witterungseinflüsse. Ebenfalls denkbar ist die Verwendung eines halbleitenden Ausgangsmaterials, z.B. VETRONIT EGS 619 AS T. Eine alternative Möglichkeit ist das Aufbringen eines halbleitenden Lacks auf das Isolationsrohr, wobei die Lackschicht dann die gewünschten feldsteuernden Eigenschaften realisiert.

In der Längsschnittdarstellung nach Fig. 1 ist beispielhaft gezeigt, dass die schwachleitende Schicht 2 nicht nur außen, sondern auch auf der Innenseite des Stützrohrs 1 aufgebracht werden kann, um die erstrebten Wirkungen in Sachen Verminderung der Gleitentladung zu erreichen, insbesondere dann, wenn z.B. taupunktbedingt auch im Inneren des Stützrohrs 1 ein Feuchteniederschlag gegeben ist.

Die schwachleitende Schicht oder Beschichtung und deren Schutzschicht 3 sind mit der Hülsenanordnung 6 und dem Kopfteil 9 elektrisch leitend verbunden.

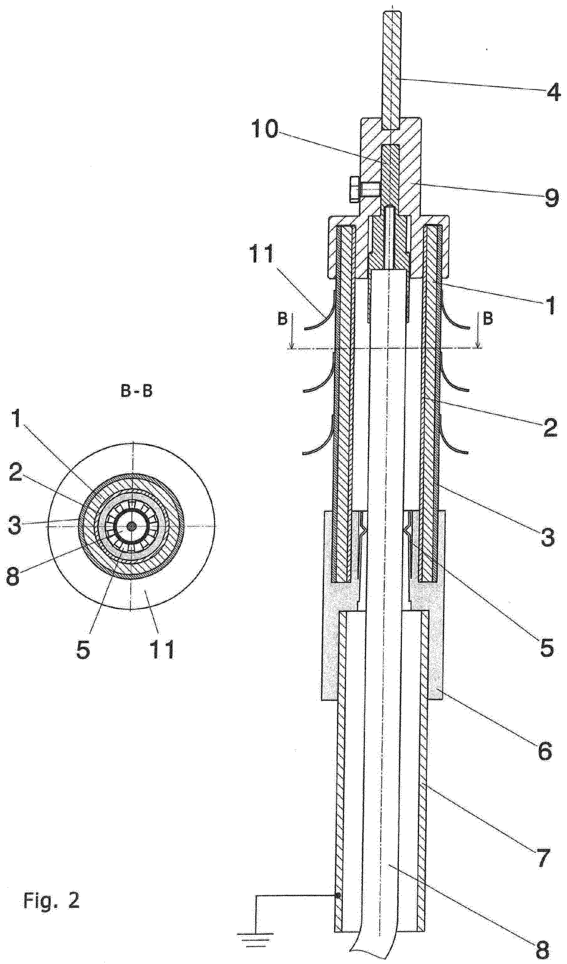

Bei der Ausführungsform nach Fig. 2 kann neben oder alternativ zur leitfähigen Beschichtung 2 auf dem Stützrohr 1 noch die Anordnung von schirmchenähnlichen Gebilden realisiert werden, die einer Verlängerung der Gesamtisolationsstrecke dienen.

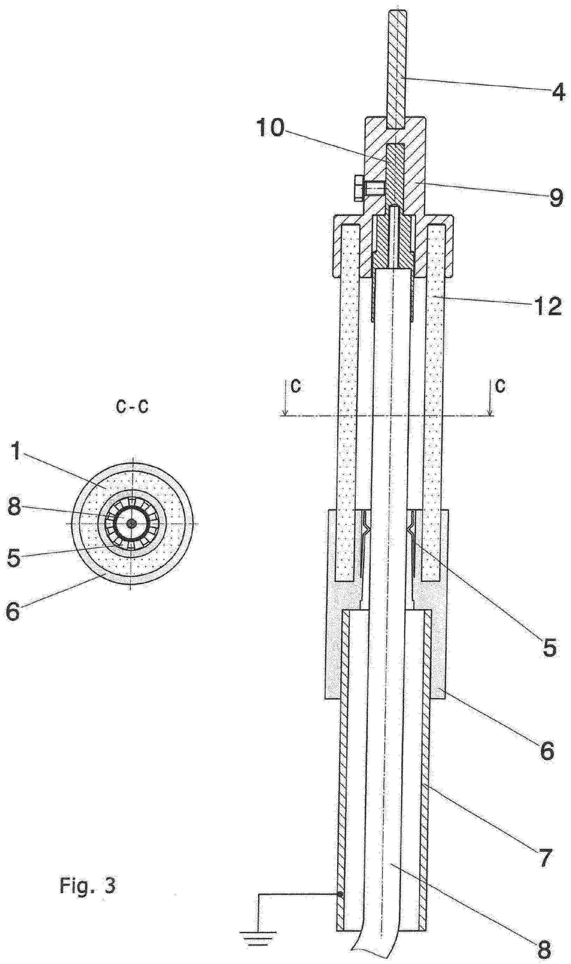

Gemäß den Darstellungen nach Fig. 3 kann das Stützrohr 12 auch vollständig aus einem schwachleitenden Material bestehen, welches ohmsche oder nichtlineare elektrische Leitfähigkeiten aufweist, wodurch der Gleitentladungseinsatz verzögert oder unterdrückt werden kann und letztendlich eine Verkürzung der Stützrohrlänge realisierbar ist.

Mit der vorgestellten Lösung und insbesondere den Varianten gemäß Ausführungsbeispielen kann ein gleitentladungsfestes Blitzschutzsystem auch bei nasser oder verschmutzter Stützrohroberfläche geschaffen werden.

Ergänzend besteht die Möglichkeit der Verlängerung der äquivalenten Isolierstrecke mittels der Schirmchen oder dergleichen Mittel, die auf das Stützrohr aufgebracht bzw. dort befestigt werden. Diese isolationsstreckenvergrößernden Mittel können sowohl auf ein mit einer Feldsteuerschicht versehenes Stützrohr als auch auf ein solches Stützrohr aufgebracht werden, das grundsätzlich aus schwachleitendem oder halbleitendem Material besteht.

## Patentansprüche

1. Blitzschutzeinrichtung mit isolierter Ableitung (8), welche mindestens abschnittsweise innerhalb eines Stützrohrs (1; 12) verläuft, sowie mit einer Fangstangenbefestigung, die auf dem Stützrohr(1; 12) aufsitzt und mit diesem verbunden ist, wobei die Fangstangenbefestigung ein Kopfteil (9) umfasst, das einerseits den Leiter der isolierten Ableitung (8) sowie andererseits die Fangstange (4) aufnimmt, weiterhin das Stützrohr (1; 12) an seinem, dem Kopfteil (9) der Fangstangenbefestigung gegenüberliegenden Ende über eine Hülsenanordnung (6) mit einem auf Erdpotential liegenden Standfuß oder Tragrohr (7) verbunden ist,
**dadurch gekennzeichnet, dass**
das Stützrohr (1; 12) feldsteuernde, elektrisch schwachleitende oder halbleitende Eigenschaften besitzt, wobei
auf der Außen- und/oder Innenoberfläche des Stützrohrs (1) eine elektrisch schwachleitende oder halbleitende Beschichtung (2) aufgebracht ist, die Beschichtung (2) mit dem Kopfteil (9) der Fangeinrichtung und einer leitfähig ausgebildeten Hülsenanordnung (6) in elektrischem Kontakt steht und innerhalb der Hülsenanordnung (6) ein Anschlussmittel (5) zum elektrischen Verbinden des Außenmantels der Ableitung (8) zum Zweck des Potentialausgleichs vorgesehen ist.

2. Blitzschutzeinrichtung nach Anspruch 1,
**dadurch gekennzeichnet, dass**
die Beschichtung von einer Schutzschicht (3) umgeben ist.

3. Blitzschutzeinrichtung nach einem der vorangegangenen Ansprüche,
**dadurch gekennzeichnet, dass**
auf der Außenoberfläche des Stützrohrs (1; 12) isolationsstreckenverlängernde Hauben oder Schirme ausgebildet sind.

4. Blitzschutzeinrichtung nach einem der vorangegangenen Ansprüche,
**dadurch gekennzeichnet, dass**
die feldsteuernden Eigenschaften des Stützrohrs (1; 12) durch lineare ohmsche oder nichtlineare elektrische Leitfähigkeiten realisiert sind.

5. Blitzschutzeinrichtung nach Anspruch 1,
**dadurch gekennzeichnet, dass**
das Anschlussmittel unter Federkraftvorspannung mit dem Außenmantel der Ableitung in Kontakt steht.

## Claims

1. Lightning protection device having an insulated diverter (8) which extends within a support tube (1; 12) at least in sections, and having an interception rod attachment resting upon and being connected to the support tube (1; 12), wherein the interception rod attachment comprises a head part (9) receiving the conductor of the insulated diverter (8), on the one hand, and the interception rod (4), on the other, the support tube (1; 12) being furthermore connected at its end opposite the head part (9) of the interception rod attachment via a sleeve arrangement (6) to a pedestal or carrying tube (7), which is at earth potential,
**characterized in that**
the support tube (1; 12) has field controlling, electrically weakly conducting or semiconducting properties, wherein
an electrically weakly conducting or semiconducting coating (2) is applied to the outer and/or inner surface of the support tube (1),
the coating (2) is in electrical contact with the head part (9) of the interception device and a sleeve arrangement (6) configured to be conductive, and a connection means (5) for electrically connecting the outer sheath of the diverter (8) for the purpose of potential equalization being provided within the sleeve arrangement (6).

2. Lightning protection device according to claim 1,
**characterized in that**
the coating is surrounded by a protective layer (3).

3. Lightning protection device according to anyone of the preceding claims,
**characterized in that**
caps or screens that extend the insulation distance are formed on the outer surface of the support tube (1; 12).

4. Lightning protection device according to anyone of the preceding claims,
**characterized in that**
the field controlling properties of the support tube (1; 12) are realized by linear ohmic or non-linear electrical conductivities.

5. Lightning protection device according to claim 1,
**characterized in that**
the connection means is in contact with the outer sheath of the diverter under spring force bias.

## Revendications

1. Système de protection contre la foudre comportant une descente isolée (8) qui s'étend au moins localement à l'intérieur d'un tube de soutien (1 ; 12), ainsi qu'une fixation de barre de captage qui repose sur le tube de soutien (1 ; 12) et qui est reliée à celui-ci, la fixation de barre de captage comprenant une partie de tête (9) qui reçoit d'une part le conducteur de la descente isolée (8) ainsi que d'autre part la barre de captage (4), et le tube de soutien (1 ; 12) est en outre relié, à son extrémité opposée à la partie de tête (9) de la fixation de barre de captage, à un pied d'appui ou à un tube de support (7) mis au potentiel de la terre, par l'intermédiaire d'un agencement à douille (6),
**caractérisé en ce que**
le tube de soutien (1 ; 12) possède des propriétés de commande de champ, de faible conduction électrique ou des propriétés semiconductrices, et
sur la surface extérieure et/ou intérieure du tube de soutien (1) est appliqué un revêtement (2) faiblement conducteur ou semi-conducteur,
le revêtement (2) est en contact électrique avec la partie de tête (9) du dispositif de captage et un agencement à douille (6) réalisé conducteur, et à l'intérieur de l'agencement à douille (6) est prévu un moyen de raccordement (5) pour la connexion électrique de l'enveloppe extérieure de la descente (8), à des fins de compensation de potentiel.

2. Système de protection contre la foudre selon la revendication 1,
**caractérisé en ce que**
le revêtement est entouré par une couche de protection (3).

3. Système de protection contre la foudre selon l'une des revendications précédentes,
**caractérisé en ce que**
des capots ou des écrans qui prolongent le trajet d'isolement sont réalisés sur la surface extérieure du tube de soutien (1 ; 12).

4. Système de protection contre la foudre selon l'une des revendications précédentes,
**caractérisé en ce que**
les propriétés de commande de champ du tube de soutien (1 ; 12) sont réalisées par des conductivités électriques ohmiques linéaires ou non linéaires.

5. Système de protection contre la foudre selon la revendication 1,
**caractérisé en ce que**
le moyen de raccordement est en contact sous précontrainte élastique avec l'enveloppe extérieure de la descente.
